# FASCICULE DE BREVET EUROPEEN

(11) **EP 3 170 710 B1**
(45) Date de publication et mention de la délivrance du brevet: **09.01.2019**
(21) Numéro de dépôt: 16195365.8
(22) Date de dépôt: 24.10.2016
(51) Int. Cl.: B60S 1/40, B60S 1/38

(54) **PIECE INTERMEDIAIRE POUR RELIER UN BALAI D'ESSUYAGE A UN BRAS D'ENTRAINEMENT D'UN ESSUIE-GLACE**
ZWISCHENSTÜCK ZUM VERBINDEN EINES SCHEIBENWISCHERS MIT EINEM ANTRIEBSARM
INTERMEDIATE PIECE FOR CONNECTING A WIPER TO A DRIVING ARM OF A WINDSCREEN WIPER

(30) Priorité: 17.11.2015 FR 1561076
(43) Date de publication de la demande: 24.05.2017
(73) Titulaire: Valeo Systèmes d'Essuyage, 78322 Le Mesnil Saint Denis (FR)
(72) Inventeur: Houssat, Stéphane, 63112 BLANZAT (FR); POTON, Eric, 63430 Pont du Château (FR); GAUCHER, Vincent, 63720 ENNEZAT (FR)
(74) Mandataire: Vincent, Catherine Marie Marguerite

(56) Documents cités:
- EP-A2- 2 179 901
- DE-A1- 10 326 266
- US-A1- 2014 096 336

## Description

La présente invention se rapporte aux systèmes d'essuyage pour véhicules automobiles, et concerne plus particulièrement un dispositif de connexion entre un balai d'essuyage et un bras d'entraînement qui sont constitutifs du système d'essuyage.

Le document US 2014/0096336 A1 divulgue l'objet du préambule de la revendication 1.

Les systèmes d'essuyage, couramment dénommés essuie-glaces, pour véhicules automobiles sont conçus pour retirer, par balayage, les liquides et salissures qui peuvent perturber la vision que le conducteur a de son environnement. Ces essuie-glaces comprennent généralement un bras d'entraînement qui effectue un mouvement de va-et-vient angulaire autour d'un axe de rotation, et un balai d'essuyage allongé équipé d'une lame racleuse réalisée en un matériau élastique. En frottant contre une surface vitrée, avant ou arrière, du véhicule automobile, la lame racleuse en balaie l'eau et un certain nombre de salissures, et les évacue en dehors du champ de vision du conducteur.

Quelle que soit la configuration du balai d'essuyage, c'est-à-dire soit un balai d'essuyage comportant des étriers articulés qui retiennent la lame racleuse en plusieurs zones distinctes, soit un balai d'essuyage comportant une lame métallique qui maintient la lame racleuse sur toute sa longueur, le balai d'essuyage est rattaché au bras d'entraînement par un dispositif de connexion qui comprend au moins un connecteur monté solidaire du balai d'essuyage.

Dans un premier mode de liaison connu, un adaptateur, apte à être assemblé avec le connecteur du balai d'essuyage, est monté sur une pièce terminale du bras d'entraînement. Le connecteur est monté mobile en rotation sur un étrier que comprend l'adaptateur. Ce premier mode de liaison est couramment utilisé pour les essuie-glaces destinés aux surfaces vitrées situées à l'avant du véhicule automobile (pare-brise). Dans un deuxième mode de liaison connu, le connecteur est raccordé à un arbre solidaire du bras d'entraînement. Ce deuxième mode de liaison est couramment rencontré dans les essuie-glaces destinés aux surfaces vitrées situées à l'arrière du véhicule (lunette arrière).

Un exemple de l'état de la technique est formé par le document FR2847221 qui décrit un essuie-glace comprenant un connecteur qui est prévu pour porter le balai d'essuyage. Le connecteur comprend une embase et un corps qui s'étend au-dessus de l'embase. L'embase comporte des moyens de solidarisation du connecteur au balai d'essuyage.

Selon une variante, le corps comprend deux paliers de réception d'un arbre porté par le bras d'entraînement. Selon une autre variante, le corps comprend deux torons prévus pour être logés à l'intérieur d'orifices respectifs ménagés à l'intérieur du bras d'entraînement.

Autrement dit, le dispositif de connexion de du document FR2847221 propose deux gammes distinctes de connecteur qui sont susceptibles d'être montés sur deux gammes distinctes de bras d'entraînement. Ces deux gammes ne sont cependant pas compatibles, si bien qu'un balai d'essuyage équipé d'un premier type de connecteur ne peut pas se monter sur un bras d'entraînement configuré pour recevoir un second type de connecteur. Le problème technique réside donc dans l'impossibilité de standardiser une conception particulière de balai d'essuyage.

Dans ce but, l'invention a pour objet une pièce intermédiaire destiné à être interposée entre un connecteur apte à porter un balai d'essuyage et un élément de connexion d'un bras d'entraînement, le connecteur comprenant au moins un palier de réception d'un premier arbre, l'élément de connexion comprenant au moins un orifice de réception d'un deuxième arbre, la pièce intermédiaire étant équipé du premier arbre et du deuxième arbre, le premier arbre et le deuxième arbre s'étendant selon des axes distincts et parallèles l'un à l'autre.

La pièce intermédiaire présente avantageusement au moins l'une des caractéristiques suivantes, prise seule ou en combinaison :
- les arbres sont aptes à former des moyens de rotation mâles à l'égard du connecteur et de l'élément de connexion,
- la pièce intermédiaire comprend avantageusement un premier étrier porteur du premier arbre,

- ce premier étrier peut présenter une section en « U » et comprendre une base de laquelle sont issues au moins deux premières parois longitudinales,
- chaque première paroi longitudinale est délimitée par une première face externe d'où émerge un premier toron,
- les premiers torons forment conjointement le premier arbre,
- la pièce intermédiaire peut comprendre un deuxième étrier porteur du deuxième arbre,
- ce deuxième étrier peut présenter une section en « U » et comprendre une base de laquelle sont issues au moins deux deuxièmes parois longitudinales,
- chaque deuxième paroi longitudinale est délimitée par une deuxième paroi externe d'où émerge un deuxième toron,
- les deuxièmes torons forment conjointement le deuxième arbre,
- le premier étrier évoqué plus haut et le deuxième étrier présenté ci-dessus sont montés tête-bêche par l'intermédiaire d'une base commune aux deux étriers,
- le premier étrier, le deuxième étrier, le premier arbre et le deuxième arbre forment une pièce unitaire issue d'une même opération de fabrication,
- la pièce intermédiaire présente une section conformée en « Y » et comprenant un plateau d'où émerge de part et d'autre du plateau le deuxième arbre,
- le plateau est ménagé parallèlement aux premières parois longitudinales,
- le plateau comprend deux surfaces externes chacune équipée d'un deuxième toron,
- les deuxièmes torons issus du plateau forment conjointement le deuxième arbre.

L'invention couvre également un connecteur apte à porter un balai d'essuyage et comprenant au moins un palier de réception, ledit connecteur étant monté en rotation sur une pièce intermédiaire telle que détaillée dans le présent document.

L'invention couvre encore un bras d'entraînement comprenant une pièce intermédiaire telle que détaillée dans le présent document. La pièce intermédiaire peut être montée en rotation par rapport au bras d'entraînement.

L'invention vise un balai d'essuyage comprenant une pièce intermédiaire telle que détaillée dans le présent document. La pièce intermédiaire peut être montée en rotation par rapport au balai d'essuyage. Un tel balai d'essuyage peut comprendre un connecteur interposé entre la pièce intermédiaire et un élément de structure du balai d'essuyage.

Enfin, l'invention couvre un système d'essuyage comprenant balai d'essuyage tel que détaillé ci-dessus et un bras d'entraînement évoqué plus haut et entraînant en rotation le balai d'essuyage.

D'autres caractéristiques, détails et avantages de l'invention ressortiront plus clairement à la lecture de la description donnée ci-après, à titre indicatif, en relation avec les figures suivantes :
- la figure 1 est une vue en perspective d'un système d'essuyage selon l'invention,
- la figure 2 est une vue en perspective d'une coupe médiane et longitudinale d'un connecteur selon l'invention qui participe du système d'essuyage illustré sur la figure 1,
- les figures 3 et 4 sont des vues en perspective sous deux angles différents du connecteur illustré sur la figure 2,
- la figure 5 est une vue en perspective d'une extrémité d'un bras d'entraînement sur laquelle le connecteur illustré sur les figures 2 à 4 est rapporté indirectement,
- la figure 6 est un éclaté en perspective de l'extrémité du bras d'entraînement illustrée sur la figure 5 et du connecteur illustré sur les figures 2 à 4 entre lesquels est interposée une pièce intermédiaire de la présente invention,
- la figure 7 est une vue en perspective de la pièce intermédiaire selon l'invention,
- la figure 8 est une vue de côté de la pièce intermédiaire illustrée sur la figure 7,
- la figure 9 est une vue en perspective d'une première variante de réalisation de la pièce intermédiaire selon l'invention,
- la figure 10 est une vue en perspective d'une deuxième variante de réalisation de la pièce intermédiaire selon l'invention,
- la figure 11 est une vue en perspective éclatée de la pièce intermédiaire illustrée sur les figures 9 ou 10 en cours d'assemblage avec le connecteur illustré sur les figures 2 à 4 et porteur d'un balai d'essuyage,
- la figure 12 est une vue en perspective assemblé des composants illustrés sur la figure 11.

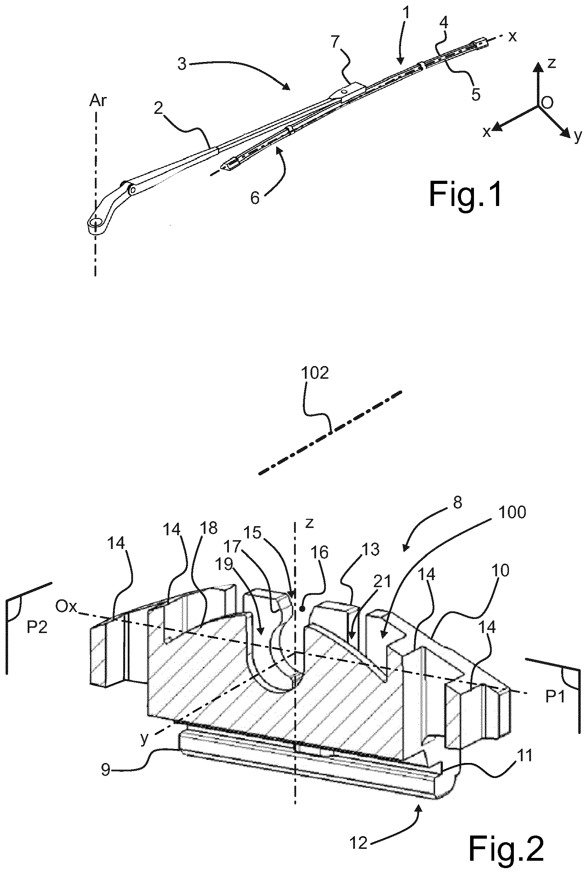

Sur les figures, les dénominations longitudinale, latérale, transversale, verticale, dessus, dessous, se réfèrent à l'orientation d'un balai d'essuyage 1 illustré sur la figure 1. Une direction longitudinale correspond à un axe longitudinal X selon lequel le balai d'essuyage 1 s'étend. Une direction transversale correspond à celle d'un axe transversal Y qui est perpendiculaire à l'axe longitudinal X et à un axe de rotation Aᵣ d'un bras d'entraînement 2 constitutif d'un système d'essuyage 3. Cette axe transversal est parallèle à un axe de rotation Y entre le balai d'essuyage et le bras d'entraînement. Une direction verticale, parallèle à celle d'un axe vertical Z, et les dénominations supérieure ou inférieure se rapportent à des orientations parallèles à l'axe de rotation Aᵣ du bras d'entraînement 2 du système d'essuyage 3, la dénomination inférieure contenant le plan du pare-brise.

Les directions évoquées ci-dessus sont illustrées dans un repère orthonormé Oxyz représenté sur les figures. Dans ce repère, l'axe Ox représente la direction longitudinale, l'axe Oy représente la direction transversale, et l'axe Oz représente la direction verticale.

Sur la figure 1, un véhicule automobile est couramment équipé du système d'essuyage 3 pour évacuer une eau et/ou des salissures présentes sur une surface vitrée, notamment une lunette arrière du véhicule automobile. Le système d'essuyage 3 comprend un bras d'entraînement 2 qui est apte à effectuer un mouvement de va-et-vient angulaire le long et au-dessus de la surface vitrée. La surface vitrée est indifféremment un pare-brise avant ou une lunette arrière équipant le véhicule automobile.

Le système d'essuyage 3 comprend aussi le balai d'essuyage 1 qui s'étend selon un axe principal, dit axe longitudinal X parallèle à l'axe Ox. Le balai d'essuyage 1 comprend au moins un déflecteur d'air 4 et une lame racleuse 5. Le déflecteur d'air 4 est prévu pour transformer une pression appliquée par un flux d'air circulant le long de la surface vitrée en une force d'appui du balai d'essuyage 1 contre la surface vitrée du véhicule automobile. La lame racleuse 5 est la pièce du balai d'essuyage 1 en contact direct avec la surface vitrée pour évacuer l'eau et/ou les salissures présentes sur ce dernier. Le déflecteur d'air 4 et la lame racleuse 5 forment un ensemble semi-rigide 6 qui est porté par un dispositif de connexion 7, interposé entre le bras d'entraînement 2 et l'ensemble semi-rigide 6.

Le dispositif de connexion 7 assure une liaison mécanique entre le bras d'entraînement 2 et le balai d'essuyage 1 et permet ainsi de séparer le balai d'essuyage 1 du bras d'entraînement 2, en vue d'un remplacement du balai d'essuyage 1.

En se reportant maintenant à la figure 2, le dispositif de connexion 7 interagit par exemple un connecteur 8 représenté selon une coupe longitudinale médiane, le long de l'axe longitudinal Ox du balai d'essuyage 1. Le connecteur 8 comprend une embase 9, qui s'étend selon les directions longitudinale et transversale, et un corps 10 qui s'étend, au-dessus de l'embase 9, sensiblement selon la direction verticale. Le corps 10 surmonte ainsi l'embase 9. Selon le mode de réalisation représenté sur les figures, le connecteur 8, pris dans son ensemble, présente un premier plan de symétrie P₁, longitudinal et vertical, parallèle au plan Oxz du repère orthonormé défini plus haut, et sensiblement médian selon la direction transversale. Selon un mode de réalisation de l'invention, le connecteur 8 est réalisé par moulage d'un matériau polymère, par exemple un matériau de la famille des Polyoxyméthylènes, connue sous l'acronyme POM, ou par moulage d'un mélange de matériaux polymères, par exemple un mélange de polymères de la famille des polycarbonates et de la famille des Acrylonitrile Butadiène Styrène, connue sous l'acronyme ABS. D'autres matériaux connus de l'homme du métier comme le PBT 30GF peuvent également être utilisés.

L'embase 9 comporte des moyens de solidarisation ou de fixation du connecteur 8 au balai d'essuyage 1. Ces moyens de solidarisation prennent la forme d'une première et d'une deuxième gorge 11 ménagées dans des parties latérales inférieures de l'embase 9, dont chacune délimite, en partie inférieure latérale de cette embase 9, un crochet 12 apte à venir en prise sur le balai d'essuyage 1. Seule une gorge 11 est représentée sur la figure 1, la deuxième gorge étant ménagée sur la partie symétrique de l'embase 9 par rapport au premier plan de symétrie P1, longitudinal vertical, du connecteur 8.

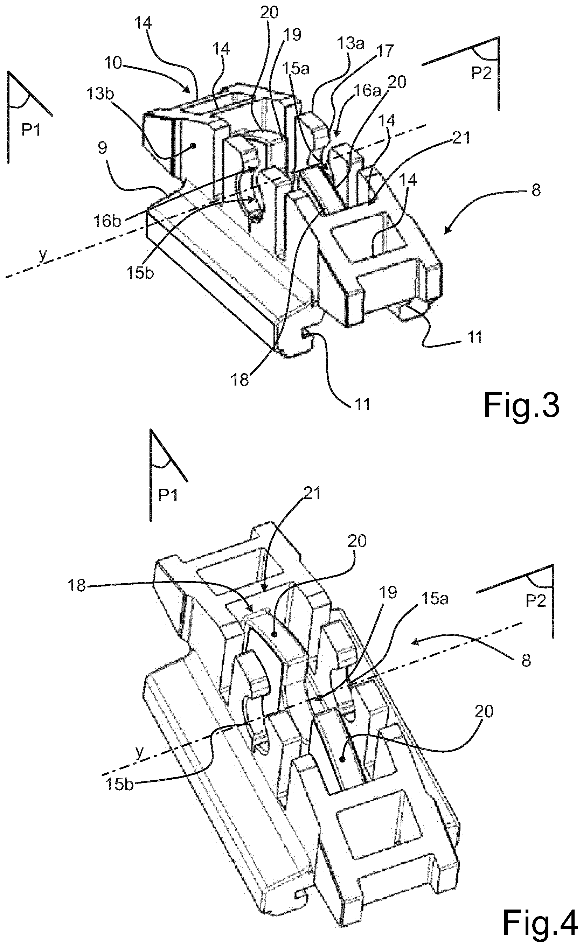

Le corps 10, avantageusement issu de matière avec l'embase 9, s'étend au-dessus de cette dernière selon la direction verticale. En se reportant également sur les figures 3 et 4, le corps 10 présente une largeur selon la direction transversale qui est inférieure à une largeur selon la direction transversale de l'embase 9.

Le corps 10 présente par ailleurs une dimension longitudinale sensiblement égale ou supérieure à la dimension longitudinale de l'embase 9. Selon le mode de réalisation de l'invention illustré sur les figures, la dimension longitudinale du corps 10 est supérieure à celle de l'embase 9. Le connecteur 8 présente un second plan de symétrie P₂, transversal et vertical, parallèle au plan Oyz du repère orthonormé défini plus haut et sensiblement médian selon l'axe longitudinal Ox.

Symétriquement disposés par rapport au premier plan de symétrie P₁ du connecteur 8, le corps 10 comporte des premier et deuxième flancs latéraux 13, sensiblement verticaux. Chacun de ces flancs latéraux 13 est sensiblement plan, de faible épaisseur selon la direction transversale, et la largeur prise entre ces deux flancs latéraux 13 représente la dimension, selon la direction transversale, du corps 10 du connecteur 8. Les premier et deuxième flancs latéraux 13 délimitent ainsi, entre eux, un volume intérieur 100 du connecteur 8. Vers les extrémités longitudinales du corps 10, les premier et deuxième flancs latéraux 13 sont reliés entre eux par un ensemble de nervures 14, qui jouent notamment un rôle de renfort du corps 10. Plus particulièrement, le connecteur 8 comporte deux couples de nervures identiques 14 qui sont ménagés symétriquement par rapport à un plan médian transversal du connecteur, ce plan médian étant parallèle au second plan de symétrie P₂.

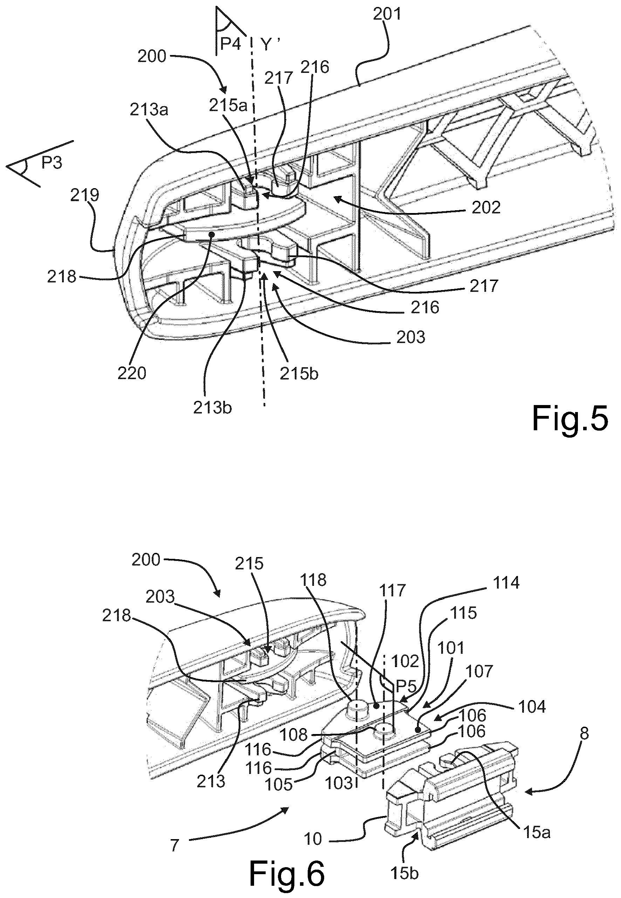

Comme le montre la figure 2, chacun des premier et deuxième flancs latéraux 13 présente sensiblement, vu de côté, un profil tel que la surface supérieure de chacun de ces flancs latéraux 13, en sa partie centrale selon la direction longitudinale du connecteur 8, forme une pente descendante en direction de chacune de leurs extrémités longitudinales. Cette forme permet à la fois d'alléger le connecteur 8, et de faciliter son assemblage avec une pièce intermédiaire 101 représenté sur les figures 6 à 12.

A travers chacun du premier et du deuxième flanc latéral 13 est ménagé un palier de réception 15 d'un moyen de rotation 102 de la pièce intermédiaire 101, ce moyen de rotation étant ici illustré par un trait interrompu qui passe par le centre de ce moyen de rotation 102.

Sur les figures 3 ou 4, sont illustrés un premier palier de réception 15a ménagé dans le premier flanc latéral 13a, et un deuxième palier de réception 15b qui peut être ménagé dans le deuxième flanc latéral 13b. Chacun des paliers de réception 15 a une forme sensiblement cylindrique et est traversant, c'est-à-dire qu'il s'étend transversalement sur toute l'épaisseur de chacun des flancs latéraux 13. Le diamètre intérieur de chacun des paliers de réception 15a, 15b est défini par rapport à un diamètre moyen d'un premier arbre 102 de la pièce intermédiaire 101 auquel le connecteur 8 est destiné à être connecté. Les centres des deux paliers de réception 15a, 15b respectivement agencés dans le premier flanc latéral 13a et dans le deuxième flanc latéral 13b sont alignés selon l'axe transversal Y parallèle à la direction de l'axe Oy du repère orthonormé défini plus haut. L'axe transversal Y matérialise l'axe de rotation du balai d'essuyage 1 par rapport au bras d'entraînement 2, une fois que le premier arbre 102 est accueilli à l'intérieur des paliers de réception 15a, 15b du connecteur 8.

Chacun des paliers de réception 15a, 15b est placé sensiblement, selon la direction longitudinale, dans la zone centrale du flanc latéral correspondant. Selon le mode de réalisation illustré sur les figures, l'axe transversal Y selon lequel les centres de ces paliers de réception 15a, 15b sont alignés est donc compris à l'intérieur du deuxième plan de symétrie P₂, transversal vertical, du connecteur 8. Selon la direction verticale, chacun des paliers de réception 15a, 15b s'étend avantageusement sensiblement en zone centrale du corps 10 du connecteur 8. Chacun de ces paliers de réception 15a, 15b est donc agencé, sur l'un ou l'autre des premier ou deuxième flancs latéraux 13a, 13b, de telle manière que, d'une part, il subsiste de la matière du flanc latéral 13a correspondant au-dessus du palier de réception 15, et de telle manière que, d'autre part, il subsiste de la matière du flanc latéral 13a correspondant au-dessous dudit palier de réception 15, entre son point le plus bas et la face supérieure de l'embase 9 du connecteur 8.

Pour permettre l'accueil et le maintien du premier arbre 102 solidaire de la pièce intermédiaire 101 dans le connecteur 8, c'est-à-dire, par exemple simultanément dans les paliers de réception 15a, 15b, respectivement agencés dans le premier et dans le deuxième flanc latéral 13a, 13b, une ouverture d'entrée 16a, 16b est ménagée au droit de chacun de ces paliers de réception 15a, 15b, au-dessus de ces derniers. La dimension longitudinale de chacune des ouvertures d'entrée 16 est inférieure au diamètre intérieur du palier de réception 15 auquel l'ouverture d'entrée 16 donne accès, et dans lequel l'ouverture d'entrée 16 débouche. En d'autres termes, chaque ouverture d'entrée 16a, 16b forme un cône d'accès au palier de réception 15a, 15b correspondant. Une première ouverture d'entrée 16a forme ainsi un cône d'accès au premier palier de réception 15a agencé dans le premier flanc latéral 13a, et une deuxième ouverture d'entrée 16b forme un cône d'accès au deuxième palier de réception 15b agencé dans le deuxième flanc latéral 13b. Ainsi, lorsque le premier arbre 102 est accueilli simultanément dans les paliers de réception 15a, 15b, ledit premier arbre 102 y est ensuite maintenu selon la direction verticale Oz. Afin de faciliter l'insertion du premier arbre 102 dans les ouvertures d'entrée 16a, 16b, et la mise en place de ce premier arbre 102 dans les paliers de réception 15a, 15b, des chanfreins 17 sont formés sur chacune des arêtes d'entrée bordant chacune des ouvertures d'entrée 16. La plus petite dimension longitudinale de l'ouverture d'entrée 16 est strictement inférieure au diamètre du premier arbre 102.

Comme cela est visible sur les figures 2 à 4, le corps 10 du connecteur 8 comporte en outre, au sein du volume intérieur 100 délimité par les premier et deuxième flancs latéraux 13a, 13b, une joue de guidage 18 qui s'étend sensiblement longitudinalement et verticalement, à partir de la face supérieure de l'embase 9. Selon le mode de réalisation illustré par les figures, la joue de guidage 18 est placée, selon la direction transversale, sensiblement en partie médiane du volume intérieur 100. Elle s'étend donc ici sensiblement selon le premier plan de symétrie P₁, longitudinal vertical, du connecteur 8.

La joue de guidage 18 est également avantageusement placée en situation sensiblement centrale selon la direction longitudinale du connecteur 8. Avantageusement, le profil d'une surface supérieure de la joue de guidage 18 est arqué ou courbé avec un centre virtuel placé sensiblement au niveau de la lame d'essuyage du balai d'essuyage, quand le connecteur 8 est solidaire de ce balai. Selon un mode de réalisation exemplatif de l'invention, la dimension de la joue de guidage 18 selon la direction verticale est inférieure à celle de chacun des flancs latéraux 13a, 13b, mesuré en leur partie centrale selon la direction longitudinale Ox.

Sensiblement en partie centrale selon la direction longitudinale, une encoche de guidage 19 est ménagée en partie supérieure de la joue de guidage 18. Cette encoche de guidage 19 débouche à la surface supérieure de la joue de guidage 18. Plus précisément, l'encoche de guidage 19 est agencée de telle manière qu'elle forme, en sa partie inférieure, sensiblement un demi-cylindre centré sur l'axe transversal Y passant par les centres des premier et deuxième paliers de rotation 15a, 15b. Le diamètre de ce demi-cylindre est supérieur à celui des paliers de rotation 15. Selon le mode de réalisation illustré sur les figures, ce demi-cylindre se prolonge verticalement, vers la surface supérieure de la joue de guidage 18, sur une dimension longitudinale sensiblement égale à son diamètre. Selon d'autres modes de réalisation alternatifs, l'encoche de guidage 19 peut présenter, en direction de la surface supérieure de la joue de guidage 18, un léger évasement.

De part et d'autre de l'encoche de guidage 19, la joue de guidage 18 comprend des montants de guidage 20 qui délimitent notamment l'encoche de guidage 19 et sont répartis longitudinalement de part et d'autre de l'encoche de guidage 19. Autrement dit, les montants de guidage 20 sont les éléments de matière de la joue de guidage 18 qui délimite l'encoche de guidage 19.

Sur les figures 5 et 6, est représentée une extrémité terminale 200 du bras d'entraînement 2. L'extrémité terminale 200 est indifféremment rapportée sur le bras d'entraînement 2 ou bien issue de matière du bras d'entraînement 2, la matière étant avantageusement une matière synthétique injectable. Le bras d'entraînement 2 est ménagé selon un plan longitudinal de symétrie P₃. L'extrémité terminale 200 comprend une coquille 201 qui délimite un espace interne 202 de l'environnement qui entoure l'extrémité terminale 200. L'espace interne 202 loge un élément de connexion 203 qui est d'une conformation comparable voire identique à celle du corps 10 du connecteur 8.

Ainsi, symétriquement disposés par rapport au troisième plan de symétrie P₃ du bras d'entraînement 2, l'élément de connexion 203 comporte des premier et deuxième montants latéraux 213 qui s'étendent dans l'espace interne 202, et qui sont sensiblement parallèles et par exemple verticaux. Chacun de ces flancs latéraux 213 est sensiblement plan, de faible épaisseur selon la direction transversale Oy, et la largeur prise entre ces deux flancs latéraux 213 représente la dimension, selon la direction transversale, de l'élément de connexion 203 du bras d'entraînement 2. Les premier et deuxième montants latéraux 213 délimitent ainsi, entre eux, un volume intérieur de l'élément de connexion 203.

A travers chacun du premier et du deuxième montant latéral 213 est ménagé un orifice de réception 215 d'un deuxième arbre 103 de la pièce intermédiaire 101. Un premier orifice de réception 215a est ainsi ménagé dans le premier montant latéral 213a, et un deuxième orifice de réception 215b peut être ménagé dans le deuxième montant latéral 213b. Chacun des orifices de réception 215 a une forme sensiblement cylindrique et est traversant, c'est-à-dire qu'il s'étend transversalement sur toute l'épaisseur de chacun des montants latéraux 213. Le diamètre intérieur de chacun des orifices de réception 215 est défini par rapport à un diamètre moyen du deuxième arbre 103 de la pièce intermédiaire 101 auquel le bras d'entraînement 201 est destiné à être connecté. Les centres des deux orifices de réception 215a, 215b respectivement agencés dans le premier montant latéral 213a et dans le deuxième montant latéral 213b sont alignés selon un axe transverse Y'. L'axe transverse Y' matérialise l'axe de rotation de la pièce intermédiaire 101 par rapport au bras d'entraînement 2, une fois que le deuxième arbre 103 est accueilli à l'intérieur des orifices de réception 215a, 215b de l'élément de connexion 203 du bras d'entraînement 201.

Chacun des orifices de réception 215a, 215b est placé sensiblement, selon la direction transversale Oy, dans la zone centrale entre les montants latéraux 213a et 213b. Selon le mode de réalisation illustré sur les figures, l'axe transverse Y' selon lequel les centres de ces orifices de réception 215a, 215b sont alignés est donc compris à l'intérieur d'un quatrième plan de symétrie P₄, transversal, de l'élément de connexion 203. Le quatrième plan de symétrie P₄ est notamment orthogonal au troisième plan de symétrie P₃. Selon une direction transverse comprise à l'intérieur du quatrième plan de symétrie P₄, chacun des orifices de réception 215a, 215b s'étend avantageusement sensiblement en zone centrale de l'élément de connexion 203.

Chacun de ces orifices de réception 215a, 215b est donc agencé, sur l'un ou l'autre des premier ou deuxième montants latéraux 213a, 213b, de telle manière que, d'une part, il subsiste de la matière du montant latéral 213 correspondant au-dessus de l'orifice de réception 215, et de telle manière que, d'autre part, il subsiste de la matière du montant latéral 213 correspondant au-dessous de l'orifice de réception 215, entre son point le plus bas et la face supérieure de l'élément de connexion 203.

Pour permettre l'accueil et le maintien du deuxième arbre 103 solidaire de la pièce intermédiaire 101 dans l'élément de connexion 203, c'est-à-dire, par exemple simultanément dans les orifices de réception 215a, 215b, respectivement agencés dans le premier et dans le deuxième montant 213a, 213b, une échancrure d'entrée 216 est ménagée au droit de chacun de ces orifices de réception 215, au-dessus de ces derniers. La dimension longitudinale de chacune des échancrures d'entrée 216 est inférieure au diamètre intérieur de l'orifice de réception 215 auquel l'échancrure d'entrée 216 donne accès, et dans lequel l'échancrure d'entrée 216 débouche. En d'autres termes, chaque échancrure d'entrée 216 forme un cône d'accès à l'orifice de réception 215 correspondant. Une première échancrure d'entrée 216 forme ainsi un cône d'accès au premier orifice de réception 215 agencé dans le premier montant latéral 213a, et une deuxième échancrure d'entrée 216 forme un cône d'accès au deuxième orifice de réception 215 agencé dans le deuxième montant latéral 213b. Ainsi, lorsque le deuxième arbre 103 est accueilli simultanément dans les orifices de réception 215a et 215b, ce deuxième arbre 103 y est ensuite maintenu. Afin de faciliter l'insertion du deuxième arbre 103 dans les échancrures d'entrée 216, et la mise en place de ce deuxième arbre 103 dans les orifices de réception 215a, 215b, des rampes 217 sont formées sur chacune des arêtes d'entrée bordant chacune des échancrures d'entrée 216. La plus petite dimension longitudinale de l'échancrure d'entrée 216 est strictement inférieure au diamètre du deuxième arbre 103.

L'élément de connexion 203 peut comporter en outre, au sein du volume intérieur délimité par les premier et deuxième montants latéraux 213a, 213b, une platine de guidage 218 qui s'étend sensiblement longitudinalement et verticalement, parallèlement au troisième plan de symétrie P₃. Selon le mode de réalisation illustré par les figures 5 ou 6, la platine de guidage 218 est placée, selon la direction transversale Oy, sensiblement en partie médiane du volume intérieur délimité par les deux montants latéraux 213.

La platine de guidage 218 est également avantageusement placée en situation sensiblement centrale selon la direction longitudinale de l'élément de connexion 203. La platine de guidage 218 s'étend hors du volume intérieur délimité par les deux montants latéraux 213 vers une extrémité distale 219, celle-ci étant avantageusement pourvue d'une échancrure. La platine de guidage 218 comporte une face supérieure 220 qui est bombée en sa zone centrale.

En se reportant aux figures 6 à 11, la pièce intermédiaire 101 selon l'invention comprend le premier arbre 102 et le deuxième arbre 103, décalé l'un par rapport à l'autre. En d'autres termes, la pièce intermédiaire 101 apte à être disposé entre le connecteur 8 et le bras d'entraînement 200 comprend deux dispositifs de rotation, distincts et avantageusement d'axes parallèles. Selon un mode de réalisation de l'invention, ces dispositifs de rotation sont le premier arbre 102 et le deuxième arbre 103. Ces arbres forment des portions mâles qui émergent de chaque côté de la pièce intermédiaire 101, le long de la direction transversale Oy.

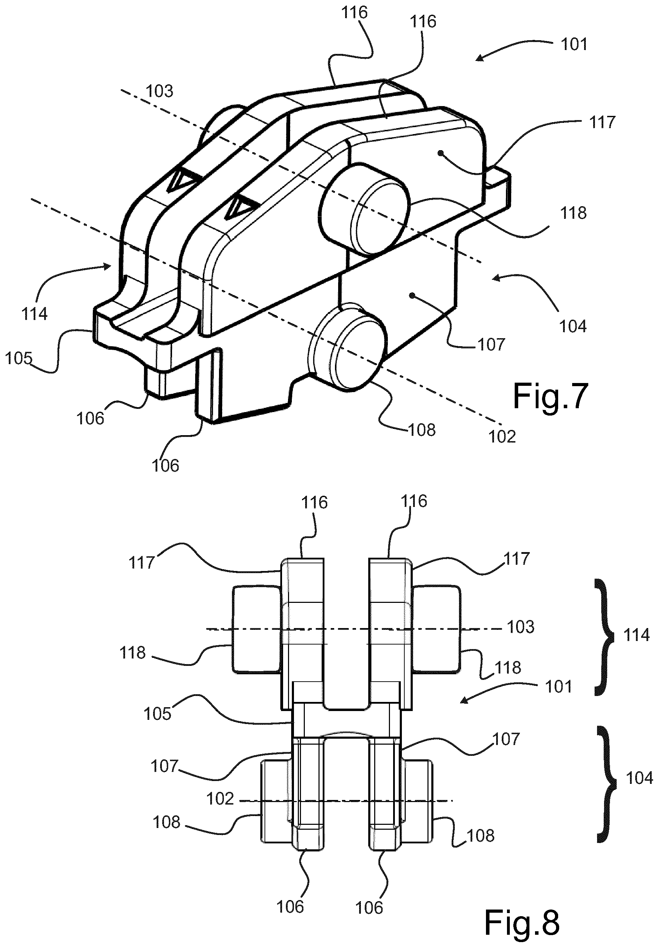

Tel qu'illustré sur les figures 7 à 11, la pièce intermédiaire 101 comprend par exemple un premier étrier 104. Le premier étrier 104 est agencé en un « U » selon une coupe ménagée selon un cinquième plan de symétrie P₅, qui est un plan transversal de la pièce intermédiaire 101. Ce plan transversal peut par exemple passer par l'axe du premier arbre 102, par l'axe du deuxième arbre 103, ou encore par ces deux axes.

Plus particulièrement le premier étrier 104 comprend une base 105 qui forme le socle du « U » et deux premières parois longitudinales 106 qui forment les bras du « U ». Les premières parois longitudinales 106 sont par exemple parallèles entre elles. Les premières parois longitudinales 106 sont délimitées par des premières faces externes 107 qui sont également parallèles entre elles et qui sont chacune pourvue d'un premier toron 108. Les premiers torons 108 forment conjointement le premier arbre 102 de la pièce intermédiaire 101. Les premiers torons 108 sont de conformation cylindrique, notamment circulaire, et sont aptes à s'encastrer à l'intérieur des paliers de réception 15a, 15b du corps 10 du connecteur 8. Cet encastrement est réalisé à partir d'une insertion de chaque première paroi longitudinale 106 entre une paroi latérale respective 13a et la joue de guidage 18 du connecteur 8. On notera que les premiers torons 108 émergent des premières parois longitudinales 106 vers l'environnement extérieur de la pièce intermédiaire 101.

En se reportant aux figures 6 à 8, la pièce intermédiaire 101 peut avantageusement comprendre un deuxième étrier 114. Le deuxième étrier 114 est agencé en un « U » selon une coupe ménagée selon le cinquième plan de symétrie P₅. Plus particulièrement, le deuxième étrier 114 comprend une base qui forme la base du « U » et deux deuxièmes parois longitudinales 116 qui forment les bras du « U ». Les deuxièmes parois longitudinales 116 sont notamment parallèles entre elles. Les deuxièmes parois longitudinales 116 comprennent des deuxièmes faces externes 117 qui sont également parallèles entre elles et qui sont chacune pourvue d'un deuxième toron 118. Les deuxièmes torons 118 forment conjointement le deuxième arbre 103 de la pièce intermédiaire 101. Les deuxièmes torons 118 sont de conformation cylindrique, notamment circulaire, et sont aptes à s'encastrer à l'intérieur des orifices de réception 215a, 215b de l'élément de connexion 203 du bras d'entraînement 2. Cet encastrement est réalisé par une insertion de chaque deuxième paroi longitudinale 116 entre un montant latéral respectif 213 et la platine de guidage 218 de l'élément de connexion 203 du bras d'entraînement 2. Le premier étrier 104 et le deuxième étrier 114 sont réunis l'un à l'autre par l'intermédiaire de la base 105, qui est ainsi commune au premier étrier 104 et au deuxième étrier 114. Autrement dit, le premier étrier 104 et le deuxième étrier 114 sont montés tête-bêche l'un par rapport à l'autre, les premières parois longitudinales 106 et les deuxièmes parois longitudinales 116 étant parallèles les unes aux autres.

On notera que les premières parois longitudinales 106 et les deuxièmes parois longitudinales 116 peuvent s'étendre dans des plans confondus ou distincts. De même, le diamètre des premiers torons 108 et le diamètre des deuxièmes torons 118 peuvent être identiques ou différents. Dans le cas où les plans sont confondus et où les diamètres sont identiques, la pièce intermédiaire 101 présente l'avantage de pouvoir être monté irrespectivement dans un sens ou dans l'autre. De le cas contraire, la distinction de plans et/ou la différence de diamètres peuvent être utilisé comme détrompeur pour obliger l'utilisateur à monter la pièce intermédiaire dans un sens particulier par rapport au balais d'essuyage, et donc par rapport au bras d'entraînement.

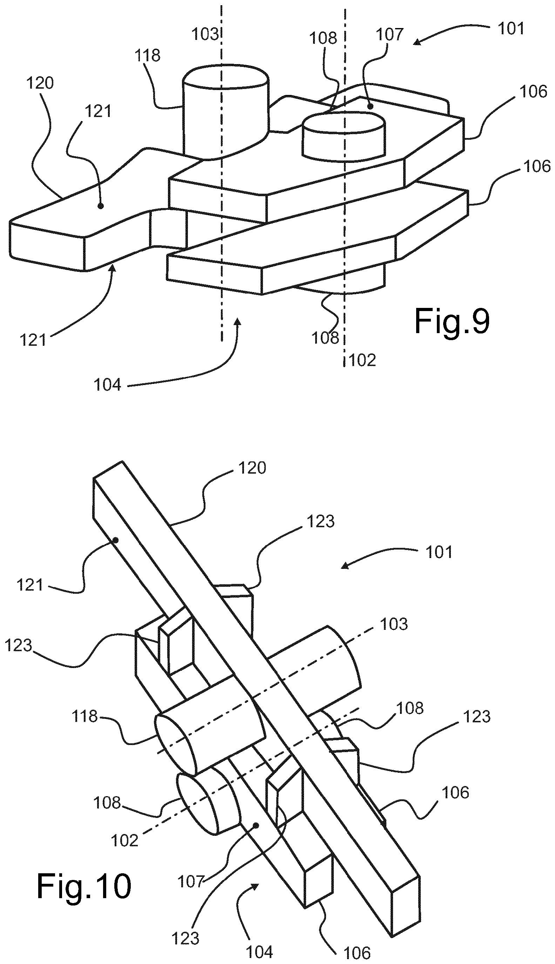

En se reportant aux figures 9 à 12, la pièce intermédiaire 101 selon une première variante de réalisation peut comprendre un plateau 120 qui est également solidaire de la base 105. Dans cette variante, la pièce intermédiaire 101 est conformée en « Y », le plateau 120 formant la jambe du «Y » et le premier étrier 104 formant les bras du «Y ». Le plateau 120 est ménagé parallèlement aux premières parois longitudinales 106. Le plateau 120 est délimité par deux surfaces externes 121 parallèles l'une à l'autre. Chaque surface externe 121 est pourvue du deuxième arbre 103, formé par exemple par les deuxièmes torons 118. Ces deuxièmes torons 118 forment conjointement le deuxième arbre 103. Dans cette variante, l'élément de connexion 203 ne comporte pas de platine de guidage de telle sorte que le plateau 120 s'encastre entre les deux montants latéraux 213 de l'élément de connexion 203.

Le plateau 120 présente une distance mesurée longitudinalement qui est supérieure à une longueur du premier étrier 104, en débordant par exemple à chaque extrémité longitudinale de l'étrier 104. Le plateau 120 et le premier étrier 104 sont également reliés l'un à l'autre par des renforts 123 qui remontent le long du plateau 120.

L'ensemble de ces dispositions est tel que le connecteur 8, comportant un type de connexion femelle et porteur du balai d'essuyage 1, est susceptible d'être rapporté sur un bras d'entraînement 2 pourvu de l'élément de connexion 203, qui est également du type de connexion femelle, à partir d'une pièce intermédiaire 101 de la présente invention comportant deux types de connexion mâle.

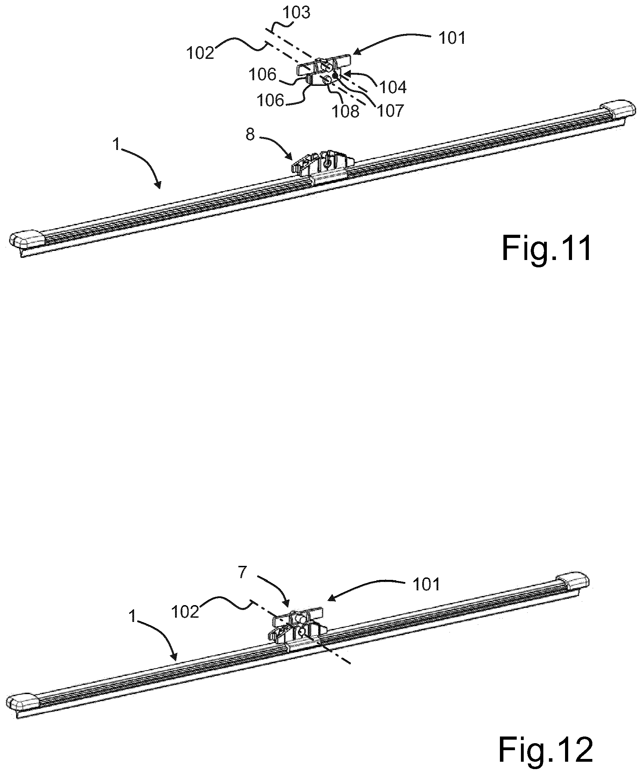

Les figures 11 et 12 montrent la pièce intermédiaire 101 sur le point d'être montée sur le connecteur 8, et cette même pièce intermédiaire 101 monté à sur le connecteur 8, par coopération du premier arbre 102, notamment via les premiers torons 108, avec le premier et le deuxième paliers 15a, 15b du connecteur 8.

Dans la description ci-dessus, on notera que la pièce intermédiaire 101 peut être agencée pour autoriser exclusivement une rotation entre elle et le bras d'entraînement. Dans un tel cas, la pièce intermédiaire 101 comprend un moyen interdisant toute rotation entre la pièce intermédiaire 101 et le connecteur 8 autour de l'axe porteur du premier arbre 102. Alternativement, la pièce intermédiaire 101 peut être agencée pour autoriser exclusivement une rotation entre elle et le connecteur 8. Dans un tel cas, la pièce intermédiaire 101 comprend un moyen interdisant toute rotation entre la pièce intermédiaire 101 et le bras d'entraînement autour de l'axe porteur du deuxième arbre 103. Selon encore une autre possibilité, la pièce intermédiaire 101 peut être agencée pour autoriser une rotation entre elle et le bras d'entraînement ainsi qu'une rotation entre elle et le connecteur 8. Une telle articulation peut être avantageuse.

La pièce intermédiaire de la présente invention est avantageusement réalisée en une matière polymérique et est par exemple réalisée par moulage, notamment par injection. Cette pièce intermédiaire et ses constituants sont alors unitaires, c'est-à-dire monobloc.

## Revendications

1. Pièce intermédiaire (101) destinée à être interposée entre un connecteur (8) apte à porter un balai d'essuyage (1) et un élément de connexion (203) d'un bras d'entraînement (2), le connecteur (8) comprenant au moins un palier de réception (15) d'un premier arbre (102), l'élément de connexion (203) comprenant au moins un orifice de réception (215) d'un deuxième arbre (103), la pièce intermédiaire (101) étant équipée du premier arbre (102) et du deuxième arbre (103), **caractérisée en ce que** le premier arbre (102) et le deuxième arbre (103) s'étendent selon des axes distincts et parallèles l'un à l'autre.

2. Pièce intermédiaire (101) selon l'une quelconque des revendications précédentes, dans laquelle les arbres (102, 103) sont aptes à former des moyens de rotation mâles à l'égard du connecteur (8) et de l'élément de connexion (203).

3. Pièce intermédiaire (101) selon l'une quelconque des revendications précédentes, comprenant un premier étrier (104) porteur du premier arbre (102).

4. Pièce intermédiaire (101) selon la revendication 3, dans laquelle le premier étrier (104) présente une section en « U » et comprend une base (105) de laquelle sont issues au moins deux premières parois longitudinales (106).

5. Pièce intermédiaire (101) selon la revendication 4, dans laquelle chaque première paroi longitudinale (106) est délimitée par une première face externe (107) d'où émerge un premier toron (108).

6. Pièce intermédiaire (101) selon la revendication 5, dans laquelle les premiers torons (108) forment conjointement le premier arbre (102).

7. Pièce intermédiaire (101) selon l'une quelconque des revendications précédentes, comprenant un deuxième étrier (114) porteur du deuxième arbre (103).

8. Pièce intermédiaire (101) selon la revendication 7, dans laquelle le deuxième étrier (114) présente une section en « U » et comprend une base (105) de laquelle sont issues au moins deux deuxièmes parois longitudinales (116).

9. Pièce intermédiaire (101) selon la revendication 8, dans laquelle chaque deuxième paroi longitudinale (116) est délimitée par une deuxième paroi externe (117) d'où émerge un deuxième toron (118).

10. Pièce intermédiaire (101) selon la revendication 9, dans laquelle les deuxièmes torons (118) forment conjointement le deuxième arbre (103).

11. Pièce intermédiaire (101) selon l'une quelconques des revendications 3 à 6 combinées à l'une quelconque des revendications 7 à 10, dans laquelle le premier étrier (104) et le deuxième étrier (114) sont montés tête-bêche par l'intermédiaire d'une base (105) commune aux deux étriers.

12. Pièce intermédiaire (101) selon la revendication 11, dans laquelle le premier étrier (104), le deuxième étrier (114), le premier arbre (102) et le deuxième arbre (103) forment une pièce unitaire issue d'une même opération de fabrication.

13. Pièce intermédiaire (101) selon l'une quelconque des revendications 1 à 6, présente une section conformée en « Y » et comprenant un plateau (120) d'où émerge de part et d'autre du plateau (120) le deuxième arbre (103).

14. Pièce intermédiaire (101) selon la revendication 13, dans laquelle le plateau (120) est ménagé parallèlement aux premières parois longitudinales (106).

15. Pièce intermédiaire (101) selon la revendication 14, dans laquelle le plateau (120) comprend deux surfaces externes (121) chacune équipée d'un deuxième toron (118).

16. Pièce intermédiaire (101) selon la revendication 15, dans laquelle les deuxièmes torons (118) issus du plateau (120) forment conjointement le deuxième arbre (103).

17. Connecteur (8) apte à porter un balai d'essuyage (1) et comprenant au moins un palier de réception (15), ledit connecteur (8) étant monté en rotation sur une pièce intermédiaire (101) selon l'une quelconque des revendications précédentes.

18. Bras d'entraînement (2) comprenant une pièce intermédiaire (101) selon l'une quelconque des revendications 1 à 16.

19. Balai d'essuyage (1) comprenant une pièce intermédiaire (101) selon l'une quelconque des revendications 1 à 16.

20. Balai d'essuyage (1) selon la revendication 19, comprenant un connecteur (8) interposé entre la pièce intermédiaire (101) et un élément de structure du balai d'essuyage (1).

21. Système d'essuyage (3) comprenant balai d'essuyage (1) selon l'une quelconque des revendications 19 ou 20 et un bras d'entraînement (2) selon la revendication 18 entraînant en rotation le balai d'essuyage (1).

## Patentansprüche

1. Zwischenstück (101), das dazu bestimmt ist, zwischen einem Verbindungsstück (8), das fähig ist, einen Scheibenwischer (1) zu tragen, und einem Verbindungselement (203) eines Antriebsarms (2) angeordnet zu sein, wobei das Verbindungsstück (8) mindestens ein Aufnahmelager (15) einer ersten Welle (102) umfasst, das Verbindungselement (203) mindestens eine Aufnahmeöffnung (215) einer zweiten Welle (103) umfasst und das Zwischenstück (101) mit der ersten Welle (102) und mit der zweiten Welle (103) ausgestattet ist, **dadurch gekennzeichnet, dass** die erste Welle (102) und die zweite Welle (103) sich entlang getrennter und parallel zueinander verlaufender Achsen erstrecken.

2. Zwischenstück (101) nach einem der vorhergehenden Ansprüche, wobei die Wellen (102, 103) fähig sind, im Hinblick auf das Verbindungsstück (8) und das Verbindungselement (203) männliche Drehmittel zu bilden.

3. Zwischenstück (101) nach einem der vorhergehenden Ansprüche, umfassend einen ersten Bügel (104), der die erste Welle (102) trägt.

4. Zwischenstück (101) nach Anspruch 3, wobei der erste Bügel (104) einen "U"-Querschnitt aufweist und eine Basis (105) umfasst, von der mindestens zwei erste Längswände (106) ausgehen.

5. Zwischenstück (101) nach Anspruch 4, wobei jede erste Längswand (106) durch eine erste Außenfläche (107) begrenzt ist, aus der eine erste Litze (108) hervortritt.

6. Zwischenstück (101) nach Anspruch 5, wobei die ersten Litzen (108) zusammen die erste Welle (102) bilden.

7. Zwischenstück (101) nach einem der vorhergehenden Ansprüche, umfassend einen zweiten Bügel (114), der die zweite Welle (103) trägt.

8. Zwischenstück (101) nach Anspruch 7, wobei der zweite Bügel (114) einen "U"-Querschnitt aufweist und eine Basis (105) umfasst, von der mindestens zwei zweite Längswände (116) ausgehen.

9. Zwischenstück (101) nach Anspruch 8, wobei jede zweite Längswand (116) durch eine zweite Außenwand (117) begrenzt ist, aus der eine zweite Litze (118) hervortritt.

10. Zwischenstück (101) nach Anspruch 9, wobei die zweiten Litzen (118) zusammen die zweite Welle (103) bilden.

11. Zwischenstück (101) nach einem der Ansprüche 3 bis 6 in Kombination mit einem der Ansprüche 7 bis 10, wobei der erste Bügel (104) und der zweite Bügel (114) mittels einer Basis (105), die beiden Bügeln gemeinsam ist, antiparallel montiert sind.

12. Zwischenstück (101) nach Anspruch 11, wobei der erste Bügel (104), der zweite Bügel (114), die erste Welle (102) und die zweite Welle (103) ein einstückiges Teil bilden, das aus demselben Fertigungsvorgang entstanden ist.

13. Zwischenstück (101) nach einem der Ansprüche 1 bis 6, aufweisend einen Querschnitt, der mit einem "Y" übereinstimmt, und umfassend eine Platte (120), wobei beiderseits der Platte (120) die zweite Welle (103) hervortritt.

14. Zwischenstück (101) nach Anspruch 13, wobei die Platte (120) parallel zu den ersten Längswänden (106) bereitgestellt ist.

15. Zwischenstück (101) nach Anspruch 14, wobei die Platte (120) zwei Außenflächen (121) umfasst, die jeweils mit einer zweiten Litze (118) ausgestattet sind.

16. Zwischenstück (101) nach Anspruch 15, wobei die zweiten Litzen (118), die von der Platte (120) ausgehen, zusammen die zweite Welle (103) bilden.

17. Verbindungsstück (8), das fähig ist, einen Scheibenwischer (1) zu tragen, und umfassend mindestens ein Aufnahmelager (15), wobei das Verbindungsstück (8) drehbar an einem Zwischenstück (101) nach einem der vorhergehenden Ansprüche montiert ist.

18. Antriebsarm (2), umfassend ein Zwischenstück (101) nach einem der Ansprüche 1 bis 16.

19. Scheibenwischer (1), umfassend ein Zwischenstück (101) nach einem der Ansprüche 1 bis 16.

20. Scheibenwischer (1) nach Anspruch 19, umfassend ein Verbindungsstück (8), das zwischen dem Zwischenstück (101) und einem Strukturelement des Scheibenwischers (1) angeordnet ist.

21. Scheibenwischersystem (3), umfassend einen Scheibenwischer (1) nach einem der Ansprüche 19 oder 20 und einen Antriebsarm (2) nach Anspruch 18, der den Scheibenwischer (1) drehbar antreibt.

## Claims

1. Intermediate piece (101) intended to be interposed between a connector (8) that is able to carry a wiper (1) and a connecting element (203) of a driving arm (2), the connector (8) comprising at least one receiving bearing (15) for receiving a first shaft (102), the connecting element (203) comprising at least one receiving orifice (215) for receiving a second shaft (103), the intermediate piece (101) being equipped with the first shaft (102) and the second shaft (103), **characterized in that** the first shaft (102) and the second shaft (103) extend along different axes that are parallel to one another.

2. Intermediate piece (101) according to either one of the preceding claims, wherein the shafts (102, 103) are able to form male rotation means with regard to the connector (8) and the connecting element (203).

3. Intermediate piece (101) according to any one of the preceding claims, comprising a first bracket (104) that carries the first shaft (102).

4. Intermediate piece (101) according to Claim 3, wherein the first bracket (104) has a "U"-shaped section and comprises a base (105) from which at least two first longitudinal walls (106) extend.

5. Intermediate piece (101) according to Claim 4, wherein each first longitudinal wall (106) is delimited by a first external face (107) from which a first trunnion (108) protrudes.

6. Intermediate piece (101) according to Claim 5, wherein the first trunnions (108) together form the first shaft (102).

7. Intermediate piece (101) according to any one of the preceding claims, comprising a second bracket (114) that carries the second shaft (103).

8. Intermediate piece (101) according to Claim 7, wherein the second bracket (114) has a "U"-shaped section and comprises a base (105) from which at least two second longitudinal walls (116) extend.

9. Intermediate piece (101) according to Claim 8, wherein each second longitudinal wall (116) is delimited by a second external wall (117) from which a second trunnion (118) protrudes.

10. Intermediate piece (101) according to Claim 9, wherein the second trunnions (118) together form the second shaft (103).

11. Intermediate piece (101) according to any one of Claims 3 to 6 in combination with any one of Claims 7 to 10, wherein the first bracket (104) and the second bracket (114) are mounted head-to-tail by way of a base (105) that is common to the two brackets.

12. Intermediate piece (101) according to Claim 11, wherein the first bracket (104), the second bracket (114), the first shaft (102) and the second shaft (103) form a single piece produced in one and the same manufacturing operation.

13. Intermediate piece (101) according to any one of Claims 1 to 6, having a "Y"-shaped section and comprising a plate (120) from which the second shaft (103) protrudes on either side of the plate (120).

14. Intermediate piece (101) according to Claim 13, wherein the plate (120) is provided parallel to the first longitudinal walls (106).

15. Intermediate piece (101) according to Claim 14, wherein the plate (120) comprises two external surfaces (121) that are each equipped with a second trunnion (118).

16. Intermediate piece (101) according to Claim 15, wherein the second trunnions (118) extending from the plate (120) together form the second shaft (103).

17. Connector (8) that is able to carry a wiper (1) and comprises at least one receiving bearing (15), said connector (8) being mounted rotationally on an intermediate piece (101) according to any one of the preceding claims.

18. Driving arm (2) comprising an intermediate piece (101) according to any one of Claims 1 to 16.

19. Wiper (1) comprising an intermediate piece (101) according to any one of Claims 1 to 16.

20. Wiper (1) according to Claim 19, comprising a connector (8) interposed between the intermediate piece (101) and a structural element of the wiper (1).

21. Wiping system (3) comprising a wiper (1) according to either one of Claims 19 and 20 and a driving arm (2) according to Claim 18 that drives the wiper (1) in rotation.
